# EUROPEAN PATENT APPLICATION

(11) **EP 2 314 474 A2**
(43) Date of publication of application: **27.04.2011**
(21) Application number: 10165156.0
(22) Date of filing: 07.06.2010
(51) Int. Cl.: B60N 2/24

(54) **Device for providing auxiliary seat at the side of vehicle seat for persons with reduced mobility**

(30) Priority: 10.06.2009 FI 20095646
(71) Applicant: Autovi Systems Oy, 96300 Rovaniemi (FI)
(72) Inventor: Väänänen, Veli-Pekka, 96100 Rovaniemi (FI); Kinisselkä, Raimo, 96190 Rovaniemi (FI)

(57) **Abstract**

A device for providing an auxiliary seat at the side of a vehicle seat for a person with reduced mobility, which device comprises a frame (9, 10, 11) for fastening the device to the chassis (L) of the vehicle and an auxiliary seat (14) functioning on the frame, the auxiliary seat being turnable from a non-use position to a use position by the side of the seat base (7) of the vehicle seat and back to the non-use position, is **characterised in that** the auxiliary seat (14) is attached pivotally (23) to a support member (12) which is attached turnably (13) to said frame (11), whereby the frame (9. 10, 11) and the support member (12) are placed and formed and the turnable attachment (13) placed so that the support member (12) and the auxiliary seat (14) are placed in the non-use position by the so called B-pillar (3) of the vehicle in close proximity to it.

## Description

### FIELD OF THE INVENTION

The invention concerns a device for providing an auxiliary seat at the side of a vehicle seat for a person with reduced mobility.

### BACKGROUND OF THE INVENTION

Many persons with reduced mobility are able to enter and exit a car or similar motor vehicle if the seat or an auxiliary seat may be extended over the lower edge of a doorway to make climbing to the vehicle seat and descending from it easier.

A possible solution is a vehicle seat which may be turned to extend partially out from the vehicle. Especially, a front seat is almost impossible and at least very difficult and expensive to be realised in such a way because of safety arrangements, e.g. an airbag and requirements for seat attachment. Therefore, a remarkably better alternative is an auxiliary seat which may be turned or moved by the side of the seat to extend partially out from the vehicle.

In US patent 6283528 there is a frame structure between a vehicle seat and the inner surface of a door in which frame structure an auxiliary seat is in a vertical position when it is not in use and may be turned into a use position where it is supported by the chassis and a support member and extends horizontally out the doorway at the side of the seat. The solution is problematic because the space between the seat and the door in a car is often tight. Moreover, at the side of a seat there are often control devices which become difficult or impossible to use because of the frame structure and the seat plate installed there.

In US patent 6039402, a seat is provided with a pivotal auxiliary seat instead of an elbow rest at one side, the auxiliary seat being in upright position when not in use whereby it makes movement and use of the hand at that side difficult. As the auxiliary seat is a part of the seat, the seat as a whole must be replaced or modified in this way, if possible.

In US patent 5040832, the seat cushion is divided into two parts. The narrower part on the side of the door is provided with electromechanics and driving means by which it may be pushed up and outwards from the car and, respectively, returned back again. The solution is suitable for persons for whom sitting down or rising up from a seat is difficult because of limited functionality of the legs or back. The solution requires, however, that a seat is modified in the way described above and provided with quite powerful electromechanic equipment. Therefore, the solution is difficult and expensive to realise.

The starting point for the present solution is the same as in US patent 6283528, i.e. to realise an auxiliary seat device in such a way that no modifications are needed in the seat or other equipment of the vehicle.

### SUMMARY OF THE INVENTION

An object of the invention is to present such a device for providing an auxiliary seat at the side of a vehicle seat for a person with reduced mobility that it causes as little hindrance as possible for use of a vehicle seat or other equipment.

To achieve this object, the device according to the invention for providing an auxiliary seat at the side of a vehicle seat for a person with reduced mobility, which device comprises a frame for fastening the device to the chassis of the vehicle and an auxiliary seat functioning on the frame, the auxiliary seat being turnable from a non-use position to a use position by the side of the seat base of the vehicle seat and back to the non-use position, is **characterised in that** the auxiliary seat is attached pivotally to a support member which is attached turnably to said frame, whereby the frame and the support member are placed and formed and the turnable attachment placed so that the support member and the auxiliary seat are placed in the non-use position by the so called B-pillar of the vehicle in close proximity to it.

The turnable attachment of the support member to the frame is in the longitudinal direction of the vehicle advantageously within the area covered by the B-pillar.

In an embodiment of the invention, the parts of the frame protruding from the chassis are placed between the seat base of the seat and on the other hand the lower edge of the doorway and B-pillar at a distance from the seat base. The parts are advantageously formed by one or more plate-shaped parts.

In another embodiment of the invention, said support member is a plate-shaped member to which the auxiliary seat is attached by means of pivots or equivalent means, whereby the auxiliary seat, when turned to the non-use position, is placed between said plate-shaped support member and B-pillar.

The auxiliary seat has advantageously a plate-shaped form.

In a further embodiment of the invention, the device comprises a cable, chain or similar means attached on the other hand to the frame and on the other hand to the auxiliary seat for holding up it in the use position and for guiding it during the movement between the non-use and use positions.

The frame of the device of the invention may be planned and installed so that a large enough space remains at the side of the seat base, whereby the use of the control devices is not made difficult. As the auxiliary seat and its turnable support member are in the non-use position turned close to the B-pillar, they are not filling said space, either.

### BRIEF DESCRIPTION OF THE DRAWINGS

The invention is described in more detail below with reference to the accompanying drawings, in which:
Figs. 1 and 2 present a device of the invention schematically in side view in use position and in non-use position, respectively;
Figs. 3 to 5 present a possible realisation of the device of the invention in further detail in side view in non-use position, in the phase of turning it to use position and in use position, respectively; and
Figs 6 and 7 present a device of Figs. 3 to 5 schematically in front view in non-use position and in use position, respectively.

### DETAILED DESCRIPTION OF THE INVENTION

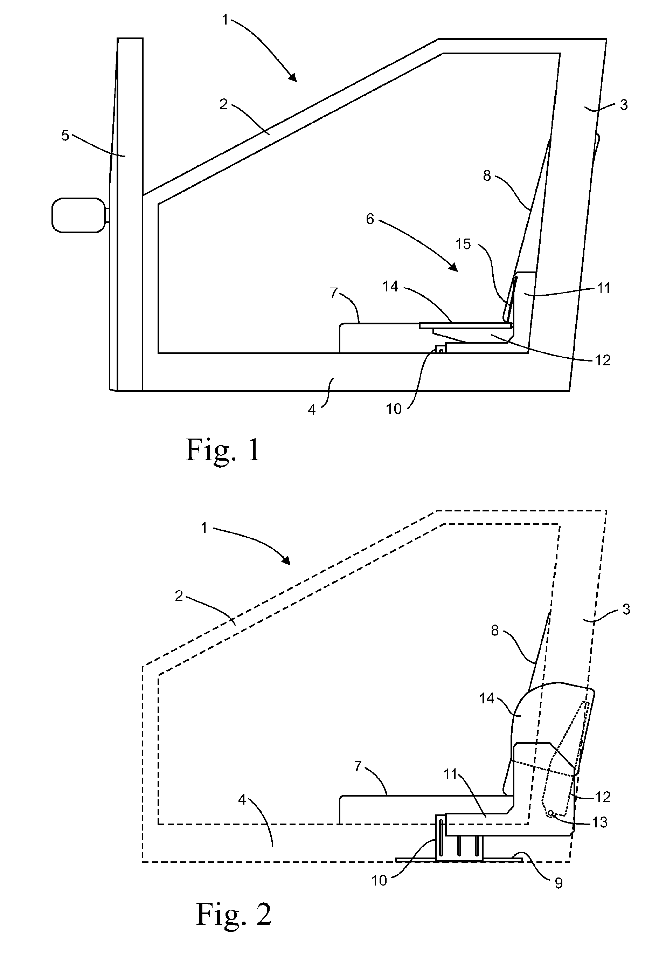

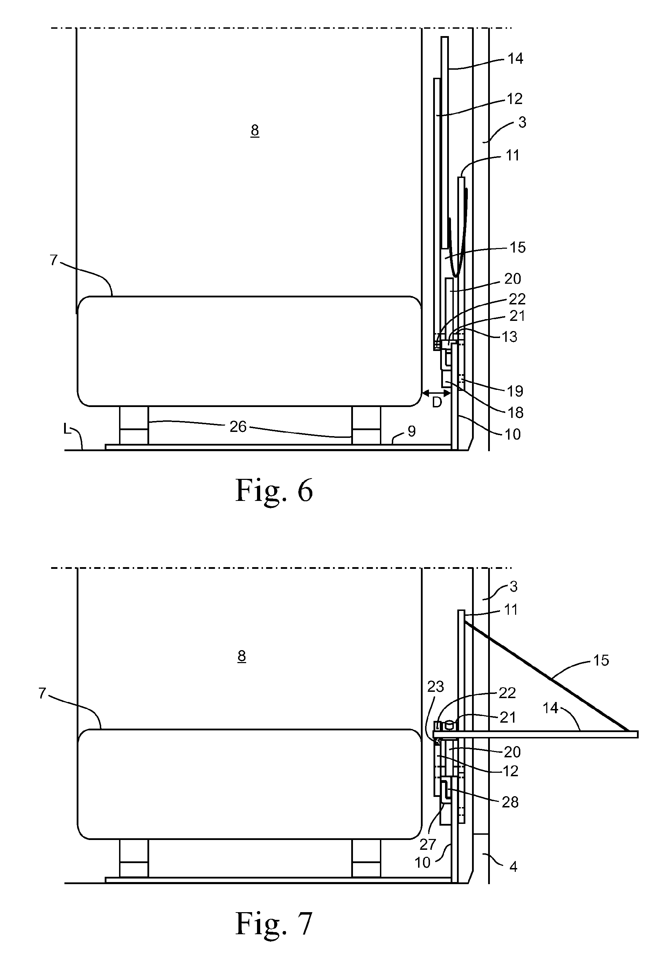

Figs. 1 and 2 present schematically a part of a car 1 around a front seat: a so called A-pillar 2, a B-pillar 3, a lower edge 4 of a doorway, a door 5 and a seat 6 comprising a seat base 7 and a back rest 8. In Fig. 1, a plate-shaped auxiliary seat 14 is in use position in which it extends by the seat base 7 approximately at the level of its upper surface over the lower edge 4 of the doorway outside the vehicle (see also Fig. 7). In Fig. 2, the structures of the vehicle chassis are presented by broken line. The auxiliary seat is turned to the non-use position so that its support member 12 turnable on the attachment 13 is turned up and at the same time the auxiliary seat 14 attached pivotally to the support member 12 is pivoted so that it is placed in an essentially vertical and in relation to the vehicle longitudinal plane close to the B-pillar and by it. When turned to the non-use position, the auxiliary seat 14 and the support member 12 are placed so that they cause essentially no hindrance to travelling in the vehicle or use of the control devices.

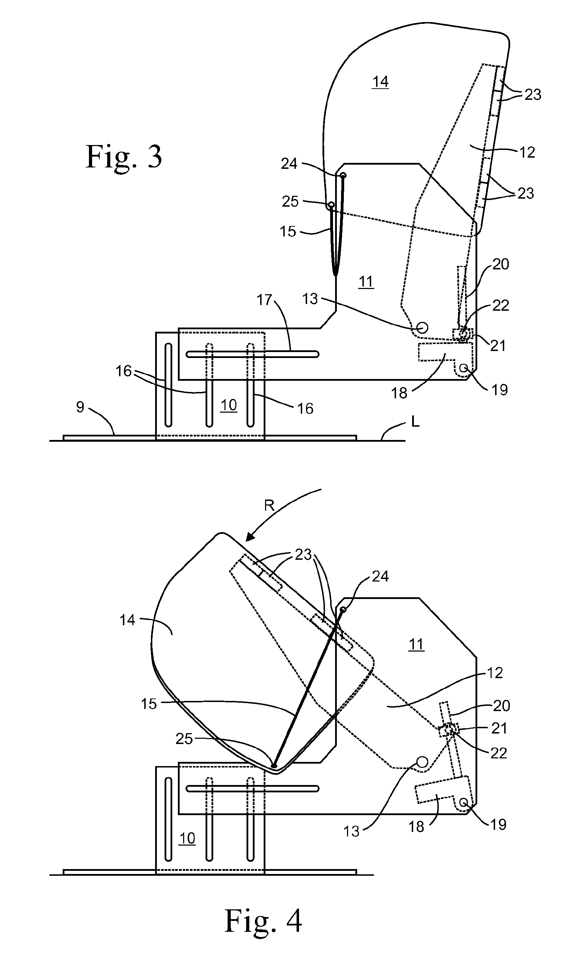

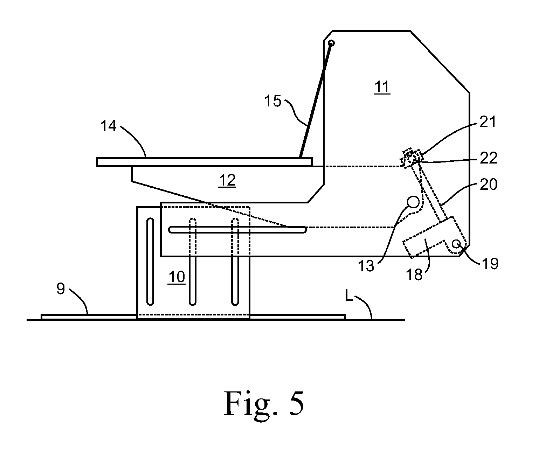

In the following, the structure and operation of the device of the invention presented in Figs. 3 to 7 is described in further detail.

In the example presented here, the frame of the device is formed by plate-shaped parts 9, 10 and 11. The plate-shaped parts 9 and 10 may form an integral part wherein the part 9 is provided for attachment to the floor L of the vehicle, advantageously under the attachment legs or rails 26 of the seat, and the plate 10 is rising up vertically beside the seat base at a suitable distance D (see Fig. 6) from it in view of the use of the control devices and to relatively low level, only a little above the lower edge 4 of the doorway. The plate 9 may be provided with e.g. attachment slots which may be aligned with the attachment holes of the seat, whereby the attachment may be made with the fastening bolts of the seat. The plates 9 and 10 may also be separate parts so that their places and positions in relation to each other may be adjusted, whereby the vertical plate 10 may surely be placed in the best possible way.

The plate 11 may be attached by means of slots 17 and 16, respectively, adjustably to the plate 10 so that it is placed quite close to the so called B-pillar 3. The attachments between the parts of the frame are made with e.g. fastening bolts or equivalent means which are not presented here because it is not necessary in view of explanation and understanding of the invention. The support member 12 of the auxiliary seat is attached to the plate 11 by means of the turnable attachment 13 which is such that a large enough space is remained between them on the other hand for a driving device 18 and on the other hand for turning and placing the auxiliary seat there. The turnable attachment 13 is in this example in the longitudinal direction of the vehicle within the area covered by the B-pillar 3.

The auxiliary seat 14 is attached to the edge of the support member 12 by means of pivots or equivalent means 23. As indicated in Figs. 3 to 7, the support member 12 being turned downwards (arrow R in Fig. 4), the auxiliary seat begins to turn at the same time outwards by the action of the cable, chain or similar means 15 and is finally placed by the side of the seat base 7 approximately at the level of and in parallel with its upper surface, the cable, chain or similar means holding it up. Respectively, as the support member 12 is turned upwards, the auxiliary seat begins to turn on the pivots 23 by action of the gravity downwards and is finally placed in the non-use position essentially in parallel with the plate-shaped support member 12 between it and the plate 11. Accordingly, the cable or similar means 15 guides the movement of the auxiliary seat when turning it either to the use position or to the non-use position. For attaching the cable or similar means 15, there are suitable holes 24 and 25 at suitable places in the plate 11 and the auxiliary seat 14 and in connection or close to them suitable tightening means (not shown) for adjusting and attaching in place the cable or similar means.

The driving device 18 is e.g. a linear actuator or equivalent device attached at the point 19 turnably to the plate 11. A nut or counterpart 21 provided with a thread corresponding to the thread of the rotating spindle 20 is attached with a turnable attachment 22 to the support member 12, the nut or counterpart moving axially on the rotating spindle and turning the support member 12 on the turnable attachment 13.

The driving device may, of course, be also some other suitable, preferably electrically operating device. The turnable attachment 13 may comprise e.g. an axle turning the plate 12, the driving device being coupled to turn the axle directly or by means of transmission.

The auxiliary seat 14 and the plates 9, 10, 11 and 12 may be made of thick enough steel plate, for example. The parts and structures of the device must be strong enough so that the safety requirements are fulfilled.

In the embodiment presented above, the device is attached to the floor of the vehicle. This is a simple and reliable solution because the structures and reinforcements provided for the attachment of the seat may then be utilised. Within the scope of the invention it is possible to attach the auxiliary seat also to other suitable parts of the vehicle chassis, e.g. to the so called B-pillar or the lower edge of the doorway which may be provided with necessary support structures for that purpose.

The device according to the invention for providing an auxiliary seat at the side of a vehicle seat for a person with reduced mobility may vary within the scope of the accompanying claims.

## Claims

1. Device for providing an auxiliary seat at the side of a vehicle seat for a person with reduced mobility, which device comprises a frame (9, 10, 11) for fastening the device to the chassis (L) of the vehicle and an auxiliary seat (14) functioning on the frame, the auxiliary seat being turnable from a non-use position to a use position by the side of the seat base (7) of the vehicle seat and back to the non-use position, **characterised in that** the auxiliary seat (14) is attached pivotally (23) to a support member (12) which is attached turnably (13) to said frame (11), whereby the frame (9. 10, 11) and the support member (12) are placed and formed and the turnable attachment (13) placed so that the support member (12) and the auxiliary seat (14) are placed in the non-use position by the so called B-pillar (3) of the vehicle in close proximity to it.

2. Device according to claim 1, **characterised in that** the turnable attachment (13) of the support member (12) to the frame (11) is in the longitudinal direction of the vehicle within the area covered by the B-pillar (3).

3. Device according to claim 1, **characterised in that** the parts (10, 11) of the frame protruding from the chassis (L) are placed between the seat base (7) of the seat and on the other hand the lower edge (4) of the doorway and B-pillar (3) at a distance (D) from the seat base (7). The parts are advantageously formed by one or more plate-shaped parts.

4. Device according to claim 3, **characterised in that** the parts (10, 11) of the frame protruding from the chassis (L) are formed by one or more plate-shaped parts

5. Device according to claim 1, **characterised in that** said support member (12) is a plate-shaped member to which the auxiliary seat (14) is attached by means of pivots or equivalent means (23), whereby the auxiliary seat (14), when turned to the non-use position, is placed between said plate-shaped support member (12) and B-pillar (3).

6. Device according to claim 1, **characterised in that** the auxiliary seat (14) has a plate-shaped form.

7. Device according to claim 1, **characterised in that** it comprises a cable, chain or similar means (15) attached on the other hand to the frame (11) and on the other hand to the auxiliary seat (14) for holding up it in the use position and for guiding it during the movement between the non-use and use positions.
